(19) Europäisches Patentamt
European Patent Office
Office européen des brevets

(11) **EP 4 683 326 A1**

(12) **EUROPEAN PATENT APPLICATION**
published in accordance with Art. 153(4) EPC

(43) Date of publication:
**21.01.2026 Bulletin 2026/04**

(51) International Patent Classification (IPC):
*H04N 19/50* (2014.01)   *G06T 17/00* (2006.01)

(21) Application number: **24769831.9**

(52) Cooperative Patent Classification (CPC):
**G06T 17/00; H04N 13/161; H04N 19/13; H04N 19/176; H04N 19/42; H04N 19/44; H04N 19/50; H04N 19/597; H04N 19/91; H04N 19/96**

(22) Date of filing: **07.03.2024**

(86) International application number:
**PCT/CN2024/080422**

(87) International publication number:
**WO 2024/188138 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.03.2023   CN 202310243014**

(71) Applicant: **Vivo Mobile Communication Co., Ltd.
Dongguan, Guangdong 523863 (CN)**

(72) Inventors:
• **ZHANG, Wei**
  **Dongguan, Guangdong 523863 (CN)**
• **WANG, Guiqi**
  **Dongguan, Guangdong 523863 (CN)**
• **YANG, Fuzheng**
  **Dongguan, Guangdong 523863 (CN)**
• **LV, Zhuoyi**
  **Dongguan, Guangdong 523863 (CN)**

(74) Representative: **Lavoix
Bayerstraße 83
80335 München (DE)**

(54) **POINT CLOUD ENCODING PROCESSING METHOD, POINT CLOUD DECODING PROCESSING METHOD, AND RELATED DEVICE**

(57)    This application discloses a point cloud encoding processing method, a point cloud decoding processing method, and a related device, and pertains to the field of computer technology. The point cloud encoding processing method according to an embodiment of this application includes: determining a to-be-encoded point cloud block based on geometric information of a point cloud, and determining a first parameter based on the to-be-encoded point cloud block, where the first parameter is used to indicate the number of bits required to encode a second parameter, and the second parameter is used to indicate a size of the to-be-encoded point cloud block; constructing a predictive tree corresponding to the to-be-encoded point cloud block, and determining a prediction residual of a node in the predictive tree; and performing entropy encoding on the prediction residual based on the first parameter to obtain a geometry encoding result.

```
                    ┌──────────┐
                    │  Start   │
                    └────┬─────┘
                         │
┌────────────────────────────────────────────────────────────┐
│ Determine a to-be-encoded point cloud block based on geometric │─ 101
│ information of a point cloud, and determine a first parameter  │
│ based on the to-be-encoded point cloud block                   │
└────────────────────────────┬───────────────────────────────┘
                             │
┌────────────────────────────────────────────────────────────┐
│ Construct a predictive tree corresponding to the to-be-encoded │─ 102
│ point cloud block, and determine a prediction residual of a node │
│ in the predictive tree                                          │
└────────────────────────────┬───────────────────────────────┘
                             │
┌────────────────────────────────────────────────────────────┐
│ Perform entropy encoding on the prediction residual based on the │─ 103
│ first parameter to obtain a geometry encoding result            │
└────────────────────────────┬───────────────────────────────┘
                             │
                    ┌──────────┐
                    │   End    │
                    └──────────┘
```

FIG. 4

**Description**

**CROSS-REFERENCE TO RELATED APPLICATIONS**

This application claims priority to Chinese Patent Application No. 202310243014.5, filed on March 14, 2023, which is incorporated herein by reference in its entirety.

**TECHNICAL FIELD**

This application pertains to the field of computer technology, and specifically relates to a point cloud encoding processing method, a point cloud decoding processing method, and a related device.

**BACKGROUND**

Point cloud is a representation form of a three-dimensional object or scene, consisting of a set of discrete points that are irregularly distributed in space and express the spatial structure and surface attributes of the three-dimensional object or scene. To accurately reflect spatial information, a considerable number of discrete points are required. To reduce bandwidth occupied for storage and transmission of point cloud data, it is necessary to perform encoding and compression processing on point cloud data. Point cloud data typically consists of geometric information describing a position, such as three-dimensional coordinates (x, y, z), and attribute information of the positions, such as color (red (Red, R), green (Green, G), blue (Blue, B)) or reflectivity. In the point cloud encoding and compression process, the encoding of geometric information and attribute information is performed separately.

Currently, in the process of encoding geometric information of a point cloud through a predictive tree encoding technology, encoding a prediction residual based on a preset fixed encoding parameter results in encoding redundancy, leading to a relatively low encoding efficiency.

**SUMMARY**

Embodiments of this application provide a point cloud encoding processing method, a point cloud decoding processing method, and a related device, to address the issue of relatively low encoding efficiency.

According to a first aspect, a point cloud encoding processing method is provided, executed by an encoder, including:

determining a to-be-encoded point cloud block based on geometric information of a point cloud, and determining a first parameter based on the to-be-encoded point cloud block, where the first parameter is used to indicate the number of bits required to encode a second parameter, and the second parameter is used to indicate a size of the to-be-encoded point cloud block;

constructing a predictive tree corresponding to the to-be-encoded point cloud block, and determining a prediction residual of a node in the predictive tree; and

performing entropy encoding on the prediction residual based on the first parameter to obtain a geometry encoding result.

According to a second aspect, a point cloud decoding processing method is provided, executed by a decoder, including:

acquiring a first parameter corresponding to a to-be-decoded point cloud block, where the first parameter is used to indicate the number of bits required to encode a second parameter, and the second parameter is used to indicate a size of the to-be-decoded point cloud block;

performing entropy decoding on a geometry encoding result corresponding to the to-be-decoded point cloud block based on the first parameter to obtain a prediction residual; and

performing geometric reconstruction processing based on the prediction residual to obtain geometric information.

According to a third aspect, a point cloud encoding processing apparatus is provided, including:

a first determining module configured to determine a to-be-encoded point cloud block based on geometric information of a point cloud, and determine a first parameter based on the to-be-encoded point cloud block, where the first parameter is used to indicate the number of bits required to encode a second parameter, and the second parameter is used to indicate a size of the to-be-encoded point cloud block;

a second determining module configured to construct a predictive tree corresponding to the to-be-encoded point cloud block, and determine a prediction residual of a node in the predictive tree; and

an encoding module configured to perform entropy encoding on the prediction residual based on the first parameter to obtain a geometry encoding result.

According to a fourth aspect, a point cloud decoding processing apparatus is provided, including:

an acquisition module configured to acquire a first parameter corresponding to a to-be-decoded point cloud block, where the first parameter is used to indicate the number of bits required to encode a second parameter, and the second parameter is used to indicate a size of the to-be-decoded point cloud block;
a decoding module configured to perform entropy decoding on a geometry encoding result corresponding to the to-be-decoded point cloud block based on the first parameter to obtain a prediction residual; and
a reconstruction module configured to perform geometric reconstruction processing based on the prediction residual to obtain geometric information.

According to a fifth aspect, a terminal is provided. The terminal includes a processor and a memory, where the memory stores a program or instructions capable of running on the processor, and when the program or instructions are executed by the processor, the steps of the method according to the first aspect are implemented, or the steps of the method according to the second aspect are implemented.

According to a sixth aspect, a terminal is provided, including a processor and a communication interface, where the processor is configured to: determine a to-be-encoded point cloud block based on geometric information of a point cloud, and determine a first parameter based on the to-be-encoded point cloud block, where the first parameter is used to indicate the number of bits required to encode a second parameter, and the second parameter is used to indicate a size of the to-be-encoded point cloud block; construct a predictive tree corresponding to the to-be-encoded point cloud block, and determine a prediction residual of a node in the predictive tree; and perform entropy encoding on the prediction residual based on the first parameter to obtain a geometry encoding result.

According to a seventh aspect, a terminal is provided, including a processor and a communication interface, where the processor is configured to: acquire a first parameter corresponding to a to-be-decoded point cloud block, where the first parameter is used to indicate the number of bits required to encode a second parameter, and the second parameter is used to indicate a size of the to-be-decoded point cloud block; perform entropy decoding on a geometry encoding result corresponding to the to-be-decoded point cloud block based on the first parameter to obtain a prediction residual; and perform geometric reconstruction processing based on the prediction residual to obtain geometric information.

According to an eighth aspect, a readable storage medium is provided. The readable storage medium stores a program or instructions, and when the program or instructions are executed by a processor, the steps of the method according to the first aspect are implemented, or the steps of the method according to the second aspect are implemented.

According to a ninth aspect, a codec system is provided, including: an encoder device and a decoder device, where the encoder device is configured to execute the steps of the method according to the first aspect, and the decoder device is configured to execute the steps of the method according to the second aspect.

According to a tenth aspect, a chip is provided. The chip includes a processor and a communication interface, the communication interface is coupled to the processor, and the processor is configured to run a program or instructions to implement the method according to the first aspect, or to implement the method according to the second aspect.

According to an eleventh aspect, a computer program/program product is provided. The computer program/-program product is stored in a storage medium, and the program/program product is executed by at least one processor to implement the steps of the method according to the first aspect, or to implement the steps of the method according to the second aspect.

In the embodiments of this application, a to-be-encoded point cloud block is determined based on geometric information of a point cloud, and a first parameter is determined based on the to-be-encoded point cloud block, where the first parameter is used to indicate the number of bits required to encode a second parameter, and the second parameter is used to indicate a size of the to-be-encoded point cloud block; a predictive tree corresponding to the to-be-encoded point cloud block is constructed, and a prediction residual of each node in the predictive tree is determined; and entropy encoding is performed on the prediction residual based on the first parameter to obtain a geometry encoding result. In this way, in the process of encoding geometric information of a point cloud using a predictive tree encoding technology, the first parameter is adaptively determined based on the size of the to-be-encoded point cloud block, and entropy encoding is performed on the prediction residual based on the first parameter, which can reduce encoding redundancy, thereby improving encoding efficiency.

## BRIEF DESCRIPTION OF DRAWINGS

FIG. 1 is a schematic diagram of an AVS encoder framework in the related art;
FIG. 2 is a schematic diagram of an AVS decoder framework in the related art;
FIG. 3 is a schematic diagram of a predictive tree in the related art;
FIG. 4 is a flowchart of a point cloud encoding processing method according to an embodiment of this application;
FIG. 5 is a flowchart of a point cloud decoding processing method according to an embodiment of this application;
FIG. 6 is a schematic structural diagram of a point cloud encoding processing apparatus according to an embodiment of this application;
FIG. 7 is a schematic structural diagram of a point cloud decoding processing apparatus according to an embodiment of this application;
FIG. 8 is a schematic structural diagram of a communication device according to an embodiment of this application; and
FIG. 9 is a schematic structural diagram of a terminal according to an embodiment of this application.

## DESCRIPTION OF EMBODIMENTS

The technical solutions in the embodiments of this application are clearly described below with reference to the accompanying drawings in the embodiments of this application. Apparently, the described embodiments are only some rather than all of the embodiments of this application. Based on the embodiments in this application, all other embodiments obtained by those of ordinary skill in the art fall within the protection scope of this application.

The terms "first", "second", and the like in this application are used to distinguish similar objects rather than to describe a specific order or sequence. It should be understood that such terms may be interchanged under appropriate circumstances, so that the embodiments of this application can be implemented in an order other than those illustrated or described herein, and the objects distinguished by "first" and "second" are generally of the same type, without limiting the number of objects. For example, there may be one or a plurality of first objects. In addition, "or" in this application indicates at least one of the connected objects. For example, "A or B" covers three cases: case 1, including A but not B; case 2, including B but not A; and case 3, including both A and B. The character "/" generally indicates that the associated objects have an "or" relationship.

The term "indicate" in this application can be either a direct indication (or explicit indication) or an indirect indication (or implicit indication). A direct indication can be understood as the sender explicitly informing the receiver of specific information, operations to be performed, or requested results in the sent indication. An indirect indication can be understood as the receiver determining corresponding information based on the indication sent by the sender, or making a judgment and determining the operations to be performed or requested results based on the judgment result.

The encoder and decoder corresponding to the point cloud encoding and decoding processing methods in the embodiments of this application may be terminals. The terminal may also be referred to as a terminal device or user equipment (User Equipment, UE). The terminal may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle-mounted equipment (Pedestrian User Equipment, VUE), or pedestrian user equipment (Pedestrian User Equipment, PUE). The wearable device includes a smartwatch, a wristband, an earphone, glasses, and the like. It should be noted that the terminal is not limited to a specific type in the embodiments of this application.

For ease of understanding, some content related to the embodiments of this application is described below:

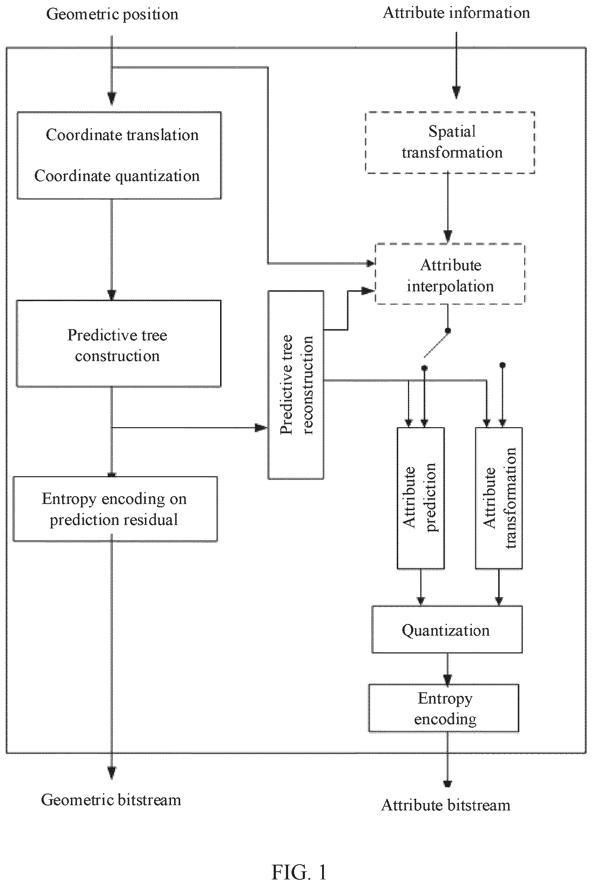

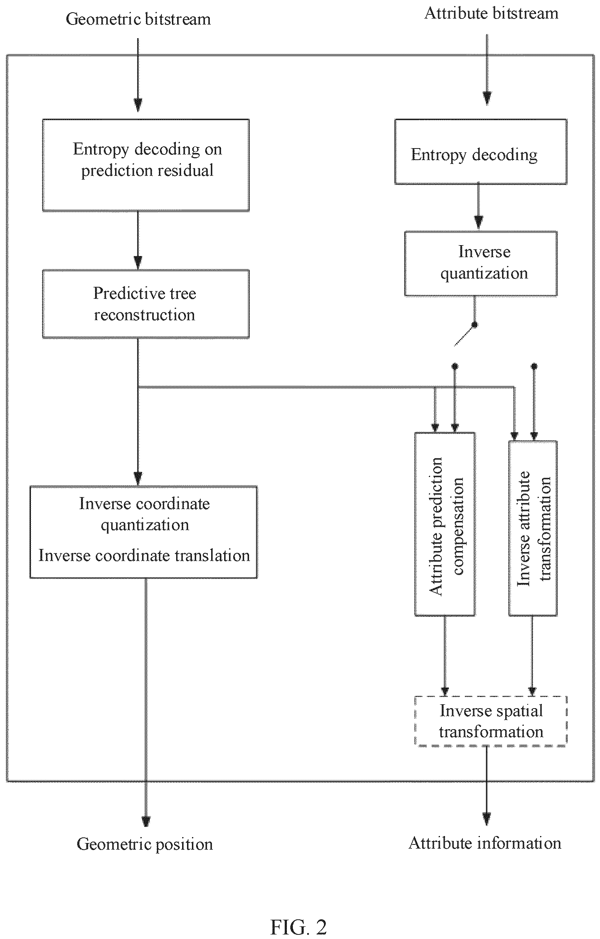

As shown in FIG. 1 and FIG. 2, in an audio video coding standard (Audio Video coding Standard, AVS) codec framework, geometric information of a point cloud and attribute information corresponding to each point are encoded separately. The encoding process for the geometric information of the point cloud is as follows: coordinate transformation is performed on the geometric information to include the entire point cloud within one bounding box (bounding box). The geometric information of the point cloud is then quantized. This quantization step primarily serves a scaling function. Due to quantization rounding, geometric information of some points may become identical, and whether to remove duplicate points is determined based on a parameter. The process of quantization and duplicate point removal belongs to the preprocessing process. The three-dimensional space containing the bounding box is divided into several non-overlapping encoding macroblocks of size $(2^{d_x}, 2^{d_y}, 2^{d_z})$, with each macroblock serving as a basic encoding unit. Different geometry encoding methods can be applied to macroblocks based on their characteristics.

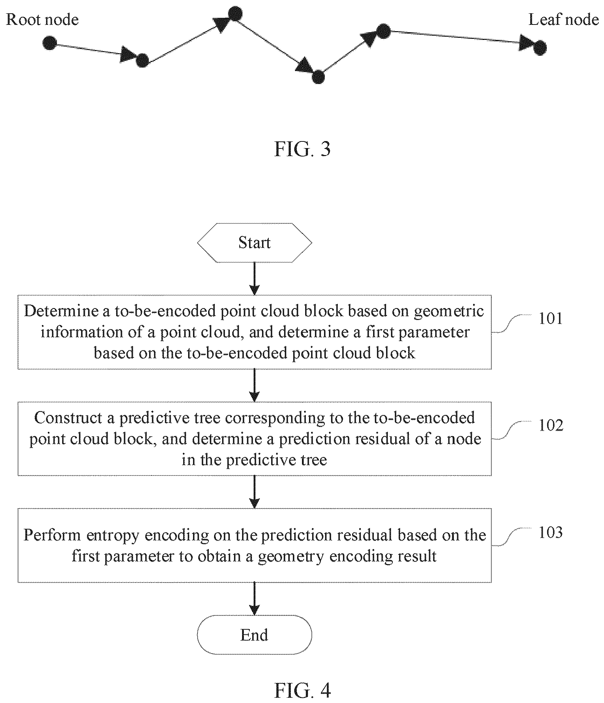

In the related art, there are two geometry encoding methods: one is octree encoding, suitable for dense point clouds; and one is predictive tree encoding, suitable for sparse point clouds. If predictive tree encoding is selected for the current macroblock, Morton sorting is first performed on this portion of the point cloud (this step is optional). A predictive tree is then constructed for the sorted point cloud. The predictive tree uses a single-chain structure, as shown in FIG. 3. Except for the unique leaf node, each tree node has only one child node. Except for the root node, which is predicted by a default value, other nodes have geometric prediction values provided by their parent nodes. The method for constructing a predictive tree is as follows: An auxiliary KD tree (K-dimensional tree) is constructed using points to be encoded. To reduce construction complexity, the encoder can control the number of nodes in the tree. The root node is selected first, then the nearest point to the root node is found in the KD tree as the unique child node of the root node, and that child node is removed from the KD tree. The same method is then used to search for the nearest neighbor of this child node in the KD tree as its child node, and so forth, thereby completing the construction of the entire predictive tree. The constructed predictive tree is a single-chain tree. The KD tree is a binary tree where each node is a k-dimensional point. Since each node in the predictive tree has only a unique child node and a unique prediction mode, only entropy encoding needs to be performed on the geometric position residual of each point in the bitstream to fully represent the entire predictive tree. Up to now, the geometry encoding ends. After geometry encoding is completed, the geometric information is reconstructed to obtain a reconstructed point cloud for use in recoloring in the attribute encoding process.

Attribute encoding mainly targets color and reflectivity information. First, whether to perform color space conversion is determined based on a parameter. If color space conversion is performed, color information is converted from the RGB (red (Red), green (Green), blue (Blue)) color space to the YUV (Y represents luminance (Luminance or Luma), and U and V represent chrominance (Chrominance or Chroma) color space. Then, the original point cloud is used to recolor the geometrically reconstructed point cloud, aligning the unencoded attribute information with the reconstructed geometric information. In color information encoding, after the point cloud is sorted using Morton codes, the nearest neighbor of the point to be predicted is found using a geometric spatial relationship, and the point to be predicted is predicted using the reconstructed attribute value of the found neighbor, to obtain a predicted attribute value. Then a difference between the true attribute value and the predicted attribute value is calculated to obtain a prediction residual. Finally, the prediction residual is quantized and encoded to generate a binary bitstream.

The following details a point cloud encoding processing method, a point cloud decoding processing method, and a related device in the embodiments of this application with reference to the accompanying drawings through some embodiments and their application scenarios.

Referring to FIG. 4, FIG. 4 is a flowchart of a point cloud encoding processing method according to an embodiment of this application, which can be applied to an encoder. As shown in FIG. 4, the point cloud encoding processing method includes the following steps.

Step 101: Determine a to-be-encoded point cloud block based on geometric information of a point cloud, and determine a first parameter based on the to-be-encoded point cloud block, where the first parameter is used to indicate the number of bits required to encode a second parameter, and the second parameter is used to indicate a size of the to-be-encoded point cloud block.

The to-be-encoded point cloud block may be an encoding macroblock. The encoding macroblock is a basic encoding unit. The point cloud may be grouped to a bounding box (bounding box), and a three-dimensional space containing the bounding box may be divided into several non-overlapping encoding macroblocks, where such encoding macroblocks are used as to-be-encoded point cloud blocks. For example, the process of determining a to-be-encoded point cloud block based on geometric information of a point cloud may be as follows: performing coordinate transformation on the geometric information to include the entire point cloud within one bounding box, and dividing the three-dimensional space containing the bounding box into several non-overlapping encoding macroblocks of size ( $2^{d_x}$, $2^{d_y}$, $2^{d_z}$ ), where such encoding macroblocks are used as to-be-encoded point cloud blocks.

Additionally, the second parameter may indicate a bit depth of an edge length of the to-be-encoded point cloud block. The bit depth of the edge length of the to-be-encoded point cloud block may refer to the number of bits required to represent the edge length of the to-be-encoded point cloud block. For example, the second parameter may indicate a bit depth of a longest edge length of the to-be-encoded point cloud block. Alternatively, the second parameter may include a first sub-parameter, a second sub-parameter, and a third sub-parameter, where the first sub-parameter indicates a bit depth of the to-be-encoded point cloud block in a first direction, the second sub-parameter indicates a bit depth of the to-be-encoded point cloud block in a second direction, and the third sub-parameter indicates a bit depth of the to-be-encoded point cloud block in a third direction. For example, if the to-be-encoded point cloud block is a cuboid, a bit depth of the cuboid in a length direction may be 32, a bit depth in a width direction may be 15, and a bit depth in a height direction may be 8. The second parameter may be 32, or the second parameter may include 32, 15, and 8.

It should be noted that the first parameter may be the minimum number of bits required to encode the second parameter, or may be described as the number of bits required to represent the second parameter. Taking the second parameter being 32 for example, the number of bits required to encode the second parameter is 6, and the first parameter is 6; Taking the second parameter including 32, 15, and 8 for example, the number of bits required to encode the second parameter is 6, 4, and 4, respectively, and the first parameter includes 6, 4, and 4.

Step 102: Construct a predictive tree corresponding to the to-be-encoded point cloud block, and determine a prediction residual of a node in the predictive tree.

A KD tree may be constructed based on points in the to-be-encoded point cloud block, a root node is selected, a nearest point to the root node is found in the KD tree as a unique child node of the root node, and that child node is removed from the KD tree. Then the same method is used to search for a nearest neighbor of this child node in the KD tree as its child node, and so forth, to construct a single-chain tree. The single-chain tree is a predictive tree corresponding to the to-be-encoded point cloud block.

Additionally, the determining a prediction residual of a node in the predictive tree may be determining the prediction residual of each node in the predictive tree; and the performing entropy encoding on the prediction residual based on the first parameter may be performing entropy encoding on the prediction residual of each node based on the first parameter to obtain a geometry encoding result of each node. During calculation of a prediction residual of a node, except for the root node, the prediction residual of each node in the predictive tree is calculated in the same manner. For example, the prediction residual of a node is a difference between geometric position coordinates of the node and geometric position coordinates of a previous node of the node. The prediction residual of the root node may be a difference between geometric position coordinates of the root node and a first preset value, where the first preset value may be 0 or other preset values.

Step 103: Perform entropy encoding on the prediction residual based on the first parameter to obtain a geometry encoding result.

The performing entropy encoding on the prediction residual based on the first parameter to obtain a geometry encoding result may include: performing a shift operation on an absolute value of the prediction residual to obtain a first value; determining a target number of encoding bits required to encode the first value; encoding the target number of encoding bits using the first parameter as the number of encoding bits, to obtain a first sub-encoding result; encoding the first value based on the target number of encoding bits to obtain a second sub-encoding result; performing a modulo operation on the absolute value of the prediction residual to obtain a second value; encoding the second value to obtain a third sub-encoding result; and encoding a third value to obtain a fourth sub-encoding result, where the third value is used to indicate whether the prediction residual is greater than zero; where the geometry encoding result includes the first sub-encoding result, the second sub-encoding result, the third sub-encoding result, and the fourth sub-encoding result.

In the embodiments of this application, a to-be-encoded point cloud block is determined based on geometric information of a point cloud, and a first parameter is determined based on the to-be-encoded point cloud block, where the first parameter is used to indicate the number of bits required to encode a second parameter, and the second parameter is used to indicate a size of the to-be-encoded point cloud block; a predictive tree corresponding to the to-be-encoded point cloud block is constructed, and a prediction residual of each node in the predictive tree is determined; and entropy encoding is performed on the prediction residual based on the first parameter to obtain a geometry encoding result. In this way, in the process of encoding geometric information of a point cloud using a predictive tree encoding technology, the first parameter is adaptively determined based on the size of the to-be-encoded point cloud block, and entropy encoding is performed on the prediction residual based on the first parameter, which can reduce encoding redundancy, thereby improving encoding efficiency.

Optionally, the performing entropy encoding on the prediction residual based on the first parameter includes:

> performing a shift operation on an absolute value of the prediction residual to obtain a first value;
> determining a target number of encoding bits required to encode the first value; and
> encoding the target number of encoding bits using the first parameter as the number of encoding bits, to obtain a first sub-encoding result; where
> the geometry encoding result includes the first sub-encoding result.

The performing a shift operation on an absolute value of the prediction residual to obtain a first value may be: performing a right-shift operation on a to-be-shifted value corresponding to the absolute value of the prediction residual to obtain the first value. The to-be-shifted value may be the absolute value of the prediction residual or a difference between the absolute value of the prediction residual and a second preset value. The second preset value may be 1 or other preset values. For example, the first value ResHalf is: ResHalf = absRes - 1 » 1, where absRes is the absolute value of the prediction residual.

Additionally, the number of encoding bits may be understood as the number of encoding bits. The target number of encoding bits may be the minimum number of encoding bits required to encode the first value. For example, if the first value is $2^{32}$, the target number of encoding bits is 32. Taking the first parameter as 6 for example, the first sub-encoding result is: 100000.

It should be noted that the number of encoding bits required to encode the first value is less than or equal to the number of encoding bits required to encode the absolute value of the prediction residual, and the number of encoding bits required to encode the absolute value of the prediction residual is less than or equal to the number of bits required to encode the size of the to-be-encoded point cloud block. The second parameter may indicate the bit depth of the edge length of the to-be-encoded point cloud block. Therefore, the number of encoding bits required to encode the first value (that is, the target number of encoding bits) is less than or equal to the second parameter, and thus the number of bits required to encode the target number of encoding bits is less than or equal to the number of bits required to encode the second parameter (that is, the first parameter). The target number of encoding bits is encoded using the first parameter as the number of encoding bits, which can meet a requirement for encoding the target number of encoding bits and significantly reduce encoding redundancy, thereby improving encoding efficiency.

In this embodiment, a shift operation is performed on the absolute value of the prediction residual to obtain a first value; a target number of encoding bits required to encode the first value is determined; the target number of encoding bits is encoded using the first parameter as the number of encoding bits, to obtain a first sub-encoding result; where the geometry encoding result includes the first sub-encoding result. In this way, compared to encoding the target number of encoding bits using a preset fixed encoding parameter, encoding the target number of encoding bits using the first parameter, adaptively determined based on the size of the to-be-encoded point cloud block, as the number of encoding bits can reduce encoding redundancy and improve encoding efficiency.

Optionally, the performing entropy encoding on the prediction residual based on the first parameter further includes:

encoding the first value based on the target number of encoding bits to obtain a second sub-encoding result;
performing a modulo operation on the absolute value of the prediction residual to obtain a second value;
encoding the second value to obtain a third sub-encoding result;
encoding a third value to obtain a fourth sub-encoding result, where the third value is used to indicate whether the prediction residual is greater than zero; where
the geometry encoding result includes the first sub-encoding result, the second sub-encoding result, the third sub-encoding result, and the fourth sub-encoding result.

The performing a modulo operation on the absolute value of the prediction residual to obtain a second value may be: performing a modulo 2 operation on the absolute value of the prediction residual to obtain the second value. For example, the second value ResRemainder is: ResRemainder = absRes % 2.

Additionally, the third value is used to indicate whether the prediction residual is greater than zero, thereby allowing encoding of the positive or negative sign of the prediction residual through encoding of the third value.

It should be noted that an identifier may alternatively be used to indicate whether the prediction residual is 0, and this identifier may be transmitted to the decoder.

In this embodiment, the first value is encoded based on the target number of encoding bits to obtain a second sub-encoding result; a modulo operation is performed on the absolute value of the prediction residual to obtain a second value; the second value is encoded to obtain a third sub-encoding result; and a third value is encoded to obtain a fourth sub-encoding result, where the third value is used to indicate whether the prediction residual is greater than zero; where the geometry encoding result includes the first sub-encoding result, the second sub-encoding result, the third sub-encoding result, and the fourth sub-encoding result, thereby implementing entropy encoding of the prediction residual.

Optionally, the second parameter includes a first sub-parameter, a second sub-parameter, and a third sub-parameter, where the first sub-parameter indicates a bit depth of the to-be-encoded point cloud block in a first direction, the second sub-parameter indicates a bit depth of the to-be-encoded point cloud block in a second direction, and the third sub-parameter indicates a bit depth of the to-be-encoded point cloud block in a third direction;

the first parameter includes a fourth sub-parameter, a fifth sub-parameter, and a sixth sub-parameter, where the fourth sub-parameter indicates the number of bits required to encode the first sub-parameter, the fifth sub-parameter indicates the number of bits required to encode the second sub-parameter, and the sixth sub-parameter indicates the number of bits required to encode the third sub-parameter; and
the performing entropy encoding on the prediction residual based on the first parameter includes:
performing entropy encoding on a prediction residual in the first direction based on the fourth sub-parameter;
performing entropy encoding on a prediction residual in the second direction based on the fifth sub-parameter; and
performing entropy encoding on a prediction residual in the third direction based on the sixth sub-parameter.

The first direction, the second direction, and the third direction may be directions of three coordinate axes of the three-dimensional space where the point cloud is located; or may be a length direction, a width direction, and a height direction of the to-be-encoded point cloud block. Assuming that the first direction, the second direction, and the third direction are the directions of the three coordinate axes (that is, X, Y, and Z axes) of the three-dimensional space where the point cloud is located, the bit depth of the to-be-encoded point cloud block in the first direction may refer to a bit depth of an edge length of the to-be-encoded point cloud block in the first direction, that is, the number of bits required to represent the edge length of the to-be-encoded point cloud block in the first direction; the bit depth of the to-be-encoded point cloud block in the second direction may refer to a bit depth of an edge length of the to-be-encoded point cloud block in the second direction, that is, the number of bits required to represent the edge length of the to-be-encoded point cloud block in the second direction; and the bit depth of the to-be-encoded point cloud block in the third direction may refer to a bit depth of an edge length of the to-be-encoded point cloud block in the third direction, that is, the number of bits required to represent the edge length of the to-be-encoded point cloud block in the third direction.

Additionally, a prediction residual of a node may include a prediction residual in the first direction, a prediction residual in the second direction, and a prediction residual in the third direction. Assuming that the first direction is an X-axis direction, the second direction is a Y-axis direction, and the third direction is a Z-axis direction, a prediction residual of a node may include a prediction residual in the X-axis direction, a prediction residual in the Y-axis direction, and a prediction residual in the Z-axis direction. The first sub-parameter indicates a bit depth of the to-be-encoded point cloud block in the X-axis direction, the second sub-parameter indicates a bit depth of the to-be-encoded point cloud block in the Y-axis direction, and the third sub-parameter indicates a bit depth of the to-be-encoded point cloud block in the Z-axis direction, thereby allowing entropy encoding of the prediction residuals in the X-axis direction, the Y-axis direction, and the Z-axis direction using the fourth sub-parameter, the fifth sub-parameter, and the sixth sub-parameter, respectively.

In this embodiment, the second parameter includes a first sub-parameter, a second sub-parameter, and a third sub-parameter, where the first parameter includes a fourth sub-parameter, a fifth sub-parameter, and a sixth sub-parameter, entropy encoding is performed on the prediction residual in the first direction based on the fourth sub-parameter; entropy encoding is performed on the prediction residual in the second direction based on the fifth sub-parameter; and entropy encoding is performed on the prediction residual in the third direction based on the sixth sub-parameter. In this way, entropy encoding can be performed on the prediction residuals of the nodes of the to-be-encoded point cloud block in each direction based on the bit depth of the to-be-encoded point cloud block in each direction, thereby reducing encoding redundancy in each direction and improving encoding efficiency.

Optionally, after the performing entropy encoding on the prediction residual based on the first parameter to obtain a geometry encoding result, the method further includes:
sending a geometric bitstream to a decoder, where the geometric bitstream includes the geometry encoding result and the first parameter.

It should be noted that the first parameter may be transmitted from the encoder to the decoder, or may be calculated by the decoder based on the bit depth of the point cloud without being written into a bitstream for transmission to the decoder.

In this embodiment, the geometric bitstream is sent to the decoder, where the geometric bitstream includes the geometry encoding result and the first parameter, thereby enabling the decoder to decode the prediction residual using the first parameter carried in the geometric bitstream.

Optionally, the determining a first parameter based on the to-be-encoded point cloud block includes:
determining the first parameter based on the to-be-encoded point cloud block in a case that a longest edge length of the to-be-encoded point cloud block is less than or equal to a threshold.

The threshold may be set to $2^{32}$, or may be set to $2^{40}$, or may be set to $2^{50}$, or the like. This embodiment does not limit the threshold, and the threshold may be prespecified. The longest edge length of the to-be-encoded point cloud block being less than or equal to the threshold can be understood as the bit depth of the longest edge length of the to-be-encoded point cloud block having an upper limit. The longest edge length of the to-be-encoded point cloud block being greater than the threshold may be considered as exceeding the supported bit depth upper limit for encoding the point cloud, and in this case, the encoding may not be skipped.

It should be noted that in the related art, the AVS encoding platform does not specify a supported bit depth upper limit for encoding point clouds. Therefore, if the bit depth of the to-be-encoded point cloud block is greater than 31, the existing predictive tree encoding technology still uses the fixed 5 bits to encode the minimum number of encoding bits required for ResHalf, which may result in insufficient bits, leading to encoding and decoding failure. In this embodiment, the bit depth of the longest edge length of the to-be-encoded point cloud block is limited, and the minimum number of encoding bits required for ResHalf is encoded using the first parameter, adaptively determined based on the size of the to-be-encoded point cloud block, as the number of encoding bits, thereby implementing normal encoding and decoding.

It should be noted that the embodiments of this application relate to the predictive tree entropy encoding part in the AVS encoder framework.

In the related art, the process of encoding a prediction residual of a node in the predictive tree corresponding to the geometric information in the AVS encoding process is as follows:

The prediction residual value of the node in the predictive tree is denoted as $Res_i[k]$, where $k=0,1,2$ indicates corresponding geometric position coordinates X, Y, Z; i indicates the number of points, $i=0,1,...,N-1$, and N is the number of points in the to-be-encoded point cloud block. A prediction residual between two adjacent points ($P_{i-1}$ and $P_i$) is:

$$Res_i[k] = \begin{cases} P_i[k] - P_{i-1}[k], i = 1, \ldots, N-1 \\ P_0[k] - 0, \qquad i = 0 \end{cases}, k = 0,1,2;$$

where
an absolute value of $Res_i[k]$ is defined as $absRes_i[k]$.

The method for encoding the absolute value of the prediction residual $absRes_i[k]$ is as follows:

(1) Determine whether the current $absRes_i[k]$ is zero; if it is zero, use a flag bit for indication.

(2) If $absRes_i[k]$ is not zero, perform the following calculation:

$$ResHalf_i[k] = absRes_i[k] - 1 \gg 1, ResRemainder_i[k] =$$

$$absRes_i[k] \% 2;$$

where "»" is a right-shift operation symbol, and "%" is a modulo operation symbol.

(3) Calculate $B_i[k]$, the minimum number of encoding bits required to encode $ResHalf_i$.

(4) Design a context model to encode $B_i[k](b_4b_3b_2b_1b_0)$, using fixed 5 bits to encode$B_i[k]$, and design partially related context model ctxNumBits[ctxIdx] to encode the number of bits, $B_i[k]$:

$$ctxIdx = 0,$$

encoding $b_0$;

$$ctxIdx = 1 + b_0,$$

encoding $b_1$;

$$ctxIdx = 3 + b_1,$$

encoding $b_2$;

$$ctxIdx = 5 + b_2 + b_1 * 2,$$

encoding $b_3$;

$$ctxIdx = 9,$$

encoding $b_4$; and
encoding $ResHalf_i[k]$ bit by bit based on the number of bits $B_i[k]$; then encoding $ResRemainder_i[k]$.

A sign of the prediction residual $Res_i[k]$ is encoded.

It should be noted that in the related art, during encoding of the absolute value of the residual using the predictive tree encoding technology, 5 bits are fixedly used to encode $B_i[k]$, the minimum number of encoding bits required for $ResHalf_i$. For relatively small to-be-encoded point cloud blocks, the number of bits required to encode $B_i[k]$ is less than 5 bits. Using 5 bits fixedly for encoding results in bit wastage, causing encoding redundancy and redundant occupation of context models.

In the embodiments of this application, during predictive tree-based encoding and decoding, the bit depth of $B_i[k]$, the number of encoding bits required to encode *ResHalf_i*, is adaptively calculated based on the size of the current point cloud block, which can improve encoding efficiency and reduce redundant occupation of context models.

In a specific embodiment, the point cloud encoding processing method executed by the encoder may include the following process.

Step (11): Set an upper limit for an edge length size (or a bit depth) of a current to-be-encoded point cloud block, denoted by a parameter MaxLCUDimLog2; then obtain bit depths in three directions based on a size of the current to-be-encoded point cloud block, and calculate the number of bits required to represent the bit depth, denoted by a parameter Maxnumbits[k], where k=0, 1, 2 indicates corresponding geometric position dimensions X, Y, and Z; and pass the Maxnumbits[k] parameter as an identifier to the decoder.

Step (12): Perform Morton sorting on points in the current to-be-encoded point cloud block (this step is optional), construct a predictive tree for the sorted point cloud, and after the construction is complete, predict each point and obtain its prediction residual, denoted as $Res_i[k]$, where k=0,1,2 indicates the corresponding geometric position coordinates X, Y, and Z; i indicates the number of points, i=0,1,...,N-1, and N is the number of points in the to-be-encoded point cloud block. A prediction residual between two adjacent points ($P_{i-1}$ and $P_i$) is:

$$Res_i[k] = \begin{cases} P_i[k] - P_{i-1}[k], i = 1, ..., N-1 \\ P_0[k] - 0, \qquad i = 0 \end{cases}, k = 0,1,2;$$

where
$P_i$ is geometric position coordinates of point i, and $P_{i-1}$ is geometric position coordinates of point i-1.

An absolute value of $Res_i[k]$ is defined as $absRes_i[k]$.

Step (13): The method for encoding the absolute value of the prediction residual $absRes_i[k]$ is as follows.

(a) Determine whether the current $absRes_i[k]$ is zero; if it is zero, use a flag bit for indication.
(b) If $absRes_i[k]$ is not zero, perform the following calculation:

$$ResHalf_i[k] = absRes_i[k] \gg 1, ResRemainder_i[k] = absRes_i[k] \% 2;$$

where "»" is a right-shift operation symbol, and "%" is a modulo operation symbol.
(c) Calculate $B_i[k]$, the minimum number of encoding bits required to encode $ResHalf_i$.
(d) Design a context model to encode $B_i[k]$, with the required bit number being Maxnumbits[k] , and design partially related context models ctxNumBits[ctxIdx] to encode each bit $b_0b_1... b_n$ of $B_i[k]$:

$$ctxIdx = 0,$$

encoding $b_0$;

$$ctxIdx = 1 + b_0,$$

encoding $b_1$;

$$ctxIdx = 3 + b_1,$$

encoding $b_2$;

$$ctxIdx = 5 + b_2 + b_1 * 2,$$

encoding $b_3$;

$$ctxIdx = 9,$$

encoding $b_4, b_5, ..., b_n$;
where n-1 is the number of bits in $B_i[k]$; and
encoding $ResHalf_i[k]$ bit by bit based on the number of bits $B_i$; and then encoding $ResRemainder_i[k]$.

Step (14): Encode a sign of the prediction residual $Res_i[k]$.

The above steps (11) to (14) are repeated to perform entropy encoding on the prediction residual of the geometric position of each point until the encoding of the last point is completed, at which point the geometry encoding ends.

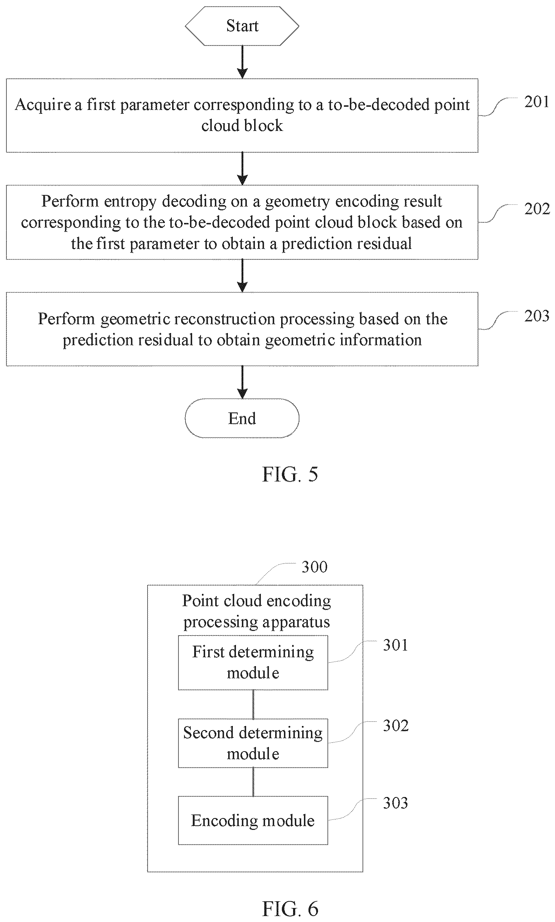

Referring to FIG. 5, FIG. 5 is a flowchart of a point cloud decoding processing method according to an embodiment of this application, which can be applied to a decoder. As shown in FIG. 5, the point cloud decoding processing method includes the following steps.

Step 201: Acquire a first parameter corresponding to a to-be-decoded point cloud block, where the first parameter is used to indicate the number of bits required to encode a second parameter, and the second parameter is used to indicate a size of the to-be-decoded point cloud block.

Step 202: Perform entropy decoding on a geometry encoding result corresponding to the to-be-decoded point cloud block based on the first parameter to obtain a prediction residual.

Step 203: Perform geometric reconstruction processing based on the prediction residual to obtain geometric information.

Optionally, the geometry encoding result includes a first sub-encoding result, a second sub-encoding result, a third sub-encoding result, and a fourth sub-encoding result; and

the performing entropy decoding on a geometry encoding result corresponding to the to-be-decoded point cloud block based on the first parameter to obtain a prediction residual includes:

> decoding the first sub-encoding result based on the first parameter to obtain a target number of encoding bits;
> decoding the second sub-encoding result based on the target number of encoding bits to obtain a first value;
> decoding the third sub-encoding result to obtain a second value, where the second value is a value obtained by performing a modulo operation on an absolute value of the prediction residual;
> decoding the fourth sub-encoding result to obtain a third value, where the third value is used to indicate whether the prediction residual is greater than zero; and
> determining the prediction residual based on the first value, the second value, and the third value.

Optionally, the decoding the first sub-encoding result based on the first parameter to obtain a target number of encoding bits includes:

decoding the first sub-encoding result using the first parameter as the number of decoding bits to obtain the target number of encoding bits, where the target number of encoding bits is the number of encoding bits required to encode the first value, and the first value is obtained by performing a shift operation on the absolute value of the prediction residual.

Optionally, the second parameter includes a first sub-parameter, a second sub-parameter, and a third sub-parameter, where the first sub-parameter indicates a bit depth of the to-be-decoded point cloud block in a first direction, the second sub-parameter indicates a bit depth of the to-be-decoded point cloud block in a second direction, and the third sub-parameter indicates a bit depth of the to-be-decoded point cloud block in a third direction;

> the first parameter includes a fourth sub-parameter, a fifth sub-parameter, and a sixth sub-parameter, where the fourth sub-parameter indicates the number of bits required to encode the first sub-parameter, the fifth sub-parameter indicates the number of bits required to encode the second sub-parameter, and the sixth sub-parameter indicates the number of bits required to encode the third sub-parameter; and
> the performing entropy decoding on a geometry encoding result corresponding to the to-be-decoded point cloud block based on the first parameter includes:

>> performing entropy decoding on a geometry encoding result of the to-be-decoded point cloud block in the first direction based on the fourth sub-parameter;
>> performing entropy decoding on a geometry encoding result of the to-be-decoded point cloud block in the second direction based on the fifth sub-parameter; and
>> performing entropy decoding on a geometry encoding result of the to-be-decoded point cloud block in the third direction based on the sixth sub-parameter.

Optionally, the acquiring a first parameter corresponding to a to-be-decoded point cloud block includes:
receiving a geometric bitstream sent by an encoder, where the geometric bitstream includes the geometry encoding result corresponding to the to-be-decoded point cloud block and the first parameter.

Optionally, the acquiring a first parameter corresponding to a to-be-decoded point cloud block includes:
acquiring the first parameter corresponding to the to-be-decoded point cloud block in a case that a longest edge length of the to-be-decoded point cloud block is less than or equal to a threshold.

It should be noted that this embodiment is a decoder-side implementation corresponding to the embodiment shown in FIG. 4. For specific implementation, reference may be made to the relevant descriptions of the embodiment shown in FIG. 4, and details are not described herein to avoid repetitive description. The same beneficial effects can be achieved.

In a specific embodiment, the point cloud decoding processing method executed by the decoder includes the following process.

Step (21): Decoding can be performed only when a size (or a bit depth) of a to-be-decoded point cloud block falls within the MaxLCUDimLog2 parameter specified. Parse the Maxnumbits[k] parameter from a geometric bitstream.

Step (22): Parse prediction residual information from the geometric bitstream as follows:

(a) Parse whether an absolute value $absRes_i[k]$ of a current prediction residual is 0; where if it is zero, the prediction residual $Res_i[k]$ is zero; k=0,1,2 indicates corresponding geometric position coordinates X, Y, Z; i indicates the number of points, i=0,1,...,N-1, and N is the number of points in the to-be-decoded point cloud block.

(b) If $absRes_i[k]$ is not zero, parse $B_i[k]$, the minimum number of encoding bits required for $ResHalf_i$, indicated by a parameter Maxnumbits[k]:

during parsing, use the related context models ctxNumBits[ctxIdx] to decode bits $b_0, b_1, ..., b_n$ of $B_i[k]$:

$$ctxIdx = 0,$$

decoding $b_0$;

$$ctxIdx = 1 + b_0,$$

decoding $b_1$;

$$ctxIdx = 3 + b_1,$$

decoding $b_2$;

$$ctxIdx = 5 + b_2 + b_1 * 2,$$

decoding $b_3$; and

$$ctxIdx = 9,$$

decoding $b_4, b_5, ..., b_n$;
where n-1 is the number of bits in $B_i[k]$.

(c) Decode $ResHalf_i[k]$ bit by bit based on the number of bits $B_i$; and then decode $ResRemainder_i[k]$.

Step (23): Decode a sign of the prediction residual $Res_i[k]$.

The above steps (21) to (23) are repeated to perform entropy decoding and coordinate compensation on the prediction residual of the geometric position of each point until the decoding of the last point is completed, at which point the geometric information is reconstructed and the decoding is completed.

This embodiment proposes a predictive tree-based entropy encoding and decoding method. During predictive tree-based encoding and decoding, the bit depth of the number of encoding bits $B_i[k]$ required to encode $ResHalf_i$ is adaptively calculated based on the size of the current point cloud block, which can improve encoding efficiency and reduce redundant occupation of context models.

It should be noted that the point cloud encoding processing method in the embodiments of this application may be executed by a point cloud encoding processing apparatus or a control module for executing the point cloud encoding processing method in the point cloud encoding processing apparatus. In the embodiments of this application, the point cloud encoding processing apparatus executing the point cloud encoding processing method is taken as an example to describe the point cloud encoding processing apparatus provided in the embodiments of this application.

Referring to FIG. 6, FIG. 6 is a schematic structural diagram of a point cloud encoding processing apparatus according to an embodiment of this application. As shown in FIG. 6, the point cloud encoding processing apparatus 300 includes:

a first determining module 301 configured to determine a to-be-encoded point cloud block based on geometric information of a point cloud, and determine a first parameter based on the to-be-encoded point cloud block, where the first parameter is used to indicate the number of bits required to encode a second parameter, and the second parameter is used to indicate a size of the to-be-encoded point cloud block;

a second determining module 302 configured to construct a predictive tree corresponding to the to-be-encoded point cloud block, and determine a prediction residual of a node in the predictive tree; and

an encoding module 303 configured to perform entropy encoding on the prediction residual based on the first parameter to obtain a geometry encoding result.

Optionally, the encoding module is specifically configured to:

perform a shift operation on an absolute value of the prediction residual to obtain a first value;
determine a target number of encoding bits required to encode the first value; and
encode the target number of encoding bits using the first parameter as the number of encoding bits, to obtain a first sub-encoding result; where
the geometry encoding result includes the first sub-encoding result.

Optionally, the encoding module is further configured to:

encode the first value based on the target number of encoding bits to obtain a second sub-encoding result;
perform a modulo operation on the absolute value of the prediction residual to obtain a second value;
encode the second value to obtain a third sub-encoding result; and
encode a third value to obtain a fourth sub-encoding result, where the third value is used to indicate whether the prediction residual is greater than zero; where
the geometry encoding result includes the first sub-encoding result, the second sub-encoding result, the third sub-encoding result, and the fourth sub-encoding result.

Optionally, the second parameter includes a first sub-parameter, a second sub-parameter, and a third sub-parameter, where the first sub-parameter indicates a bit depth of the to-be-encoded point cloud block in a first direction, the second sub-parameter indicates a bit depth of the to-be-encoded point cloud block in a second direction, and the third sub-parameter indicates a bit depth of the to-be-encoded point cloud block in a third direction;

the first parameter includes a fourth sub-parameter, a fifth sub-parameter, and a sixth sub-parameter, where the fourth sub-parameter indicates the number of bits required to encode the first sub-parameter, the fifth sub-parameter indicates the number of bits required to encode the second sub-parameter, and the sixth sub-parameter indicates the number of bits required to encode the third sub-parameter; and
the performing entropy encoding on the prediction residual based on the first parameter includes:

performing entropy encoding on a prediction residual in the first direction based on the fourth sub-parameter;
performing entropy encoding on a prediction residual in the second direction based on the fifth sub-parameter; and
performing entropy encoding on a prediction residual in the third direction based on the sixth sub-parameter.

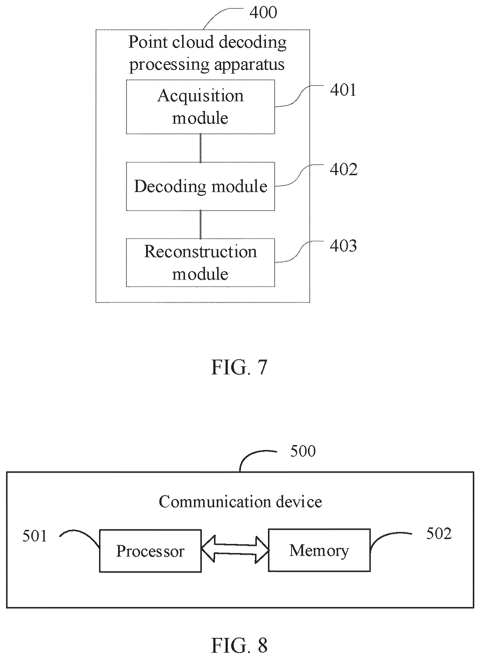

Optionally, the apparatus further includes:
a sending module configured to send a geometric bitstream to a decoder, where the geometric bitstream includes the geometry encoding result and the first parameter.
Optionally, the first determining module is specifically configured to:
determine the first parameter based on the to-be-encoded point cloud block in a case that a longest edge length of the to-be-encoded point cloud block is less than or equal to a threshold.
The point cloud encoding processing apparatus 300 in this embodiment of this application can reduce encoding redundancy, thereby improving encoding efficiency.
The point cloud encoding processing apparatus in the embodiments of this application may be an apparatus, an apparatus or electronic device having an operating system, or a component, an integrated circuit, or a chip in a terminal. The apparatus or electronic device may be a mobile terminal or a non-mobile terminal. For example, the mobile terminal may include, but is not limited to, the types of terminals listed above, and the non-mobile terminal may be a server, a network attached storage (Network Attached Storage, NAS), a personal computer (personal computer, PC), a television (television, TV), a teller machine, a self-service machine, or the like, which are not specifically limited in the embodiments of this application.
The point cloud encoding processing apparatus provided in the embodiments of this application can implement the processes implemented by the method embodiment in FIG. 4, with the same technical effects achieved. To avoid repetition, details are not described herein again.
It should be noted that the point cloud decoding processing method in the embodiments of this application may be executed by a point cloud decoding processing apparatus or a control module for executing the point cloud decoding processing method in the point cloud decoding processing apparatus. In the embodiments of this application, the point cloud decoding processing apparatus executing the point cloud decoding processing method is taken as an example to describe the point cloud decoding processing apparatus provided in the embodiments of this application.
Referring to FIG. 7, FIG. 7 is a structural diagram of a point cloud decoding processing apparatus according to an embodiment of this application. As shown in FIG. 7, the point cloud decoding processing apparatus 400 includes:

an acquisition module 401 configured to acquire a first parameter corresponding to a to-be-decoded point cloud block, where the first parameter is used to indicate the number of bits required to encode a second parameter, and the second parameter is used to indicate a size of the to-be-decoded point cloud block;
a decoding module 402 configured to perform entropy decoding on a geometry encoding result corresponding to the to-be-decoded point cloud block based on the first parameter to obtain a prediction residual; and
a reconstruction module 403 configured to perform geometric reconstruction processing based on the prediction residual to obtain geometric information.

Optionally, the geometry encoding result includes a first sub-encoding result, a second sub-encoding result, a third sub-encoding result, and a fourth sub-encoding result; and
the decoding module includes:

a first decoding unit configured to decode the first sub-encoding result based on the first parameter to obtain a target number of encoding bits;
a second decoding unit configured to decode the second sub-encoding result based on the target number of encoding bits to obtain a first value;
a third decoding unit configured to decode the third sub-encoding result to obtain a second value, where the second value is a value obtained by performing a modulo operation on an absolute value of the prediction residual;
a fourth decoding unit configured to decode the fourth sub-encoding result to obtain a third value, where the third value is used to indicate whether the prediction residual is greater than zero; and
a determining unit configured to determine the prediction residual based on the first value, the second value, and the third value.

Optionally, the first decoding unit is specifically configured to:
decode the first sub-encoding result using the first parameter as the number of decoding bits to obtain the target number of encoding bits, where the target number of encoding bits is the number of encoding bits required to encode the first value, and the first value is obtained by performing a shift operation on the absolute value of the prediction residual.

Optionally, the second parameter includes a first sub-parameter, a second sub-parameter, and a third sub-parameter, where the first sub-parameter indicates a bit depth of the to-be-decoded point cloud block in a first direction, the second sub-parameter indicates a bit depth of the to-be-decoded point cloud block in a second direction, and the third sub-parameter indicates a bit depth of the to-be-decoded point cloud block in a third direction;

the first parameter includes a fourth sub-parameter, a fifth sub-parameter, and a sixth sub-parameter, where the fourth sub-parameter indicates the number of bits required to encode the first sub-parameter, the fifth sub-parameter indicates the number of bits required to encode the second sub-parameter, and the sixth sub-parameter indicates the number of bits required to encode the third sub-parameter; and
the decoding module is specifically configured to:

perform entropy decoding on a geometry encoding result of the to-be-decoded point cloud block in the first direction based on the fourth sub-parameter;
perform entropy decoding on a geometry encoding result of the to-be-decoded point cloud block in the second direction based on the fifth sub-parameter; and
perform entropy decoding on a geometry encoding result of the to-be-decoded point cloud block in the third direction based on the sixth sub-parameter.

Optionally, the acquisition module is specifically configured to:
receive a geometric bitstream sent by an encoder, where the geometric bitstream includes the geometry encoding result and the first parameter corresponding to the to-be-decoded point cloud block.

Optionally, the acquisition module is specifically configured to:
acquire the first parameter corresponding to the to-be-decoded point cloud block in a case that a longest edge length of the to-be-decoded point cloud block is less than or equal to a threshold.

The point cloud decoding processing apparatus in the embodiments of this application may be an apparatus, an apparatus or electronic device having an operating system, or a component, an integrated circuit, or a chip in a terminal. The apparatus or electronic device may be a mobile terminal or a non-mobile terminal. For example, the mobile terminal may include, but is not limited to, the types of terminals listed above, and the non-mobile terminal may be a server, a network attached storage (Network Attached Storage, NAS), a personal computer (personal computer, PC), a television (television, TV), a teller machine, a self-service machine, or the like, which are not specifically limited in the embodiments of this application.

The point cloud decoding processing apparatus provided in the embodiments of this application can implement the processes implemented by the method embodiment in FIG. 5, with the same technical effects achieved. To avoid repetition, details are not described herein again.

Optionally, as shown in FIG. 8, an embodiment of this application further provides a communication device 500, including a processor 501 and a memory 502, where the memory 502 stores a program or instructions capable of running on the processor 501. For example, in a case that the communication device 500 is an encoder device, when the program or instructions are executed by the processor 501, the steps of the above point cloud encoding processing method embodiment are implemented, with the same technical effects achieved. In a case that the communication device 500 is a decoder device, when the program or instructions are executed by the processor 501, the steps of the above point cloud decoding processing method embodiment are implemented, with the same technical effects achieved. To avoid repetition, details are not described herein again.

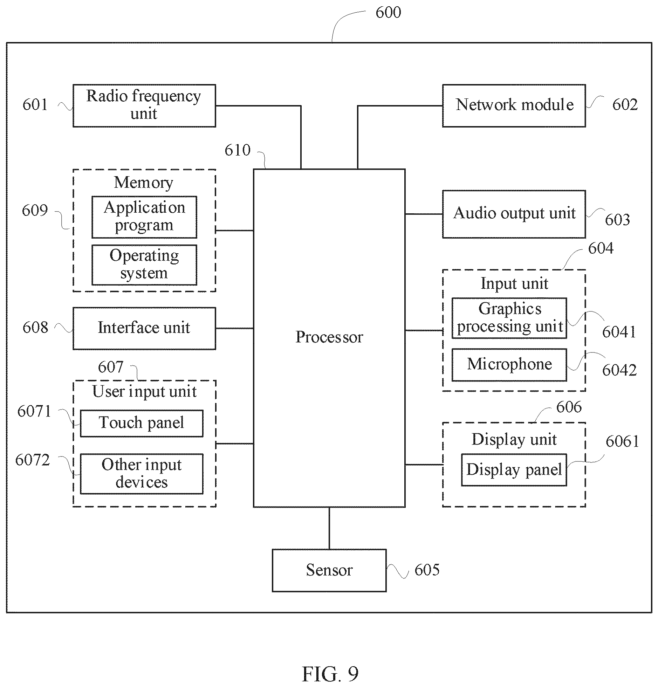

An embodiment of this application further provides a terminal, including a processor and a communication interface. The processor is configured to: determine a to-be-encoded point cloud block based on geometric information of a point cloud, and determine a first parameter based on the to-be-encoded point cloud block, where the first parameter is used to indicate the number of bits required to encode a second parameter, and the second parameter is used to indicate a size of the to-be-encoded point cloud block; construct a predictive tree corresponding to the to-be-encoded point cloud block, and determine a prediction residual of a node in the predictive tree; and perform entropy encoding on the prediction residual based on the first parameter to obtain a geometry encoding result. Alternatively, the processor is configured to: acquire a first parameter corresponding to a to-be-decoded point cloud block, where the first parameter is used to indicate the number of bits required to encode a second parameter, and the second parameter is used to indicate a size of the to-be-decoded point cloud block; perform entropy decoding on a geometry encoding result corresponding to the to-be-decoded point cloud block based on the first parameter to obtain a prediction residual; and perform geometric reconstruction processing based on the prediction residual to obtain geometric information. This terminal embodiment corresponds to the above point cloud encoding processing method or point cloud decoding processing method embodiments, and the implementation processes and methods of the above point cloud encoding processing method or point cloud decoding processing method embodiments can be applied to this terminal embodiment, with the same technical effects achieved. Specifically, FIG. 9 is a schematic diagram of a hardware structure of a terminal implementing an embodiment of this application.

The terminal 600 includes, but is not limited to, at least some of the following components: a radio frequency unit 601, a network module 602, an audio output unit 603, an input unit 604, a sensor 605, a display unit 606, a user input unit 607, an interface unit 608, a memory 609, a processor 610, and the like.

Those skilled in the art can understand that the terminal 600 may further include a power source (such as a battery) supplying power to various components. The power source may be logically connected to the processor 610 through a power management system, thereby implementing functions such as charging management, discharging management, and power consumption management through the power management system. The terminal structure shown in FIG. 9 does not constitute a limitation on the terminal, and the terminal may include more or fewer components than shown in the figure, or a combination of some components, or the components disposed differently, which is not described herein.

It should be understood that, in the embodiments of this application, the input unit 604 may include a graphics processing unit (Graphics Processing Unit, GPU) 6041 and a microphone 6042. The graphics processing unit 6041 processes image data of a still picture or video obtained by an image capture device (such as a camera) in a video capture mode or an image capture mode. The display unit 606 may include a display panel 6061, and the display panel 6061 may be configured in the form of a liquid crystal display, an organic light-emitting diode, or the like. The user input unit 607 includes at least one of a touch panel 6071 and other input devices 6072. The touch panel 6071 is also referred to as a touchscreen. The touch panel 6071 may include two parts: a touch detection device and a touch controller. The other input devices 6072 may include, but are not limited to, a physical keyboard, a function key (such as a volume control key or an on/off key), a trackball, a mouse, a joystick, and the like, which are not described herein.

In the embodiments of this application, after receiving downlink data from a network-side device, the radio frequency unit 601 may transmit the downlink data to the processor 610 for processing. Additionally, the radio frequency unit 601 may send uplink data to the network-side device. Typically, the radio frequency unit 601 includes, but is not limited to, an antenna, an amplifier, a transceiver, a coupler, a low-noise amplifier, a duplexer, and the like.

The memory 609 may be configured to store software programs or instructions and various data. The memory 609 may mainly include a first storage area for storing programs or instructions and a second storage area for storing data. The first storage area may store an operating system, an application program or an instruction required for at least one function (such as a sound play function or an image play function), and the like. Additionally, the memory 609 may include a volatile memory or a non-volatile memory, or the memory 609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), or a direct Rambus dynamic random access memory (Direct Rambus RAM, DRRAM). The memory 609 in the embodiments of this application includes, but is not limited to, these and any other suitable types of memory.

The processor 610 may include one or more processing units. Optionally, an application processor and a modem processor are integrated in the processor 610, where the application processor mainly handles operations related to an operating system, a user interface, an application program, and the like, and the modem processor, such as a baseband processor, mainly handles wireless communication signals. It can be understood that the modem processor may alternatively be not integrated in the processor 610.

In a case that the terminal is an encoder:
The processor 610 is configured to:

determine a to-be-encoded point cloud block based on geometric information of a point cloud, and determine a first parameter based on the to-be-encoded point cloud block, where the first parameter is used to indicate the number of bits required to encode a second parameter, and the second parameter is used to indicate a size of the to-be-encoded point cloud block;

construct a predictive tree corresponding to the to-be-encoded point cloud block, and determine a prediction residual of a node in the predictive tree; and

perform entropy encoding on the prediction residual based on the first parameter to obtain a geometry encoding result.

Optionally, the processor 610 is configured to:

perform a shift operation on an absolute value of the prediction residual to obtain a first value;

determine a target number of encoding bits required to encode the first value; and

encode the target number of encoding bits using the first parameter as the number of encoding bits, to obtain a first sub-encoding result; where

the geometry encoding result includes the first sub-encoding result.

Optionally, the processor 610 is configured to:

encode the first value based on the target number of encoding bits to obtain a second sub-encoding result;

perform a modulo operation on the absolute value of the prediction residual to obtain a second value;

encode the second value to obtain a third sub-encoding result; and

encode a third value to obtain a fourth sub-encoding result, where the third value is used to indicate whether the prediction residual is greater than zero; where

the geometry encoding result includes the first sub-encoding result, the second sub-encoding result, the third sub-encoding result, and the fourth sub-encoding result.

Optionally, the second parameter includes a first sub-parameter, a second sub-parameter, and a third sub-parameter, where the first sub-parameter indicates a bit depth of the to-be-encoded point cloud block in a first direction, the second sub-parameter indicates a bit depth of the to-be-encoded point cloud block in a second direction, and the third sub-parameter indicates a bit depth of the to-be-encoded point cloud block in a third direction;

the first parameter includes a fourth sub-parameter, a fifth sub-parameter, and a sixth sub-parameter, where the fourth sub-parameter indicates the number of bits required to encode the first sub-parameter, the fifth sub-parameter indicates the number of bits required to encode the second sub-parameter, and the sixth sub-parameter indicates the number of bits required to encode the third sub-parameter; and

the processor 610 is configured to:

perform entropy encoding on a prediction residual in the first direction based on the fourth sub-parameter;

perform entropy encoding on a prediction residual in the second direction based on the fifth sub-parameter; and

perform entropy encoding on a prediction residual in the third direction based on the sixth sub-parameter.

Optionally, the processor 610 is configured to:

send a geometric bitstream to a decoder, where the geometric bitstream includes the geometry encoding result and the first parameter.

Optionally, the processor 610 is configured to:

determine the first parameter based on the to-be-encoded point cloud block in a case that a longest edge length of the to-be-encoded point cloud block is less than or equal to a threshold.

In a case that the terminal is a decoder:

The processor 610 is configured to:

acquire a first parameter corresponding to a to-be-decoded point cloud block, where the first parameter is used to indicate the number of bits required to encode a second parameter, and the second parameter is used to indicate a size of the to-be-decoded point cloud block;

perform entropy decoding on a geometry encoding result corresponding to the to-be-decoded point cloud block based on the first parameter to obtain a prediction residual; and

perform geometric reconstruction processing based on the prediction residual to obtain geometric information.

Optionally, the geometry encoding result includes a first sub-encoding result, a second sub-encoding result, a third sub-encoding result, and a fourth sub-encoding result; and

the processor 610 is specifically configured to:

decode the first sub-encoding result based on the first parameter to obtain a target number of encoding bits;

decode the second sub-encoding result based on the target number of encoding bits to obtain a first value;

decode the third sub-encoding result to obtain a second value, where the second value is a value obtained by performing a modulo operation on an absolute value of the prediction residual;

decode the fourth sub-encoding result to obtain a third value, where the third value is used to indicate whether the prediction residual is greater than zero; and

determine the prediction residual based on the first value, the second value, and the third value.

Optionally, the processor 610 is specifically configured to:

decode the first sub-encoding result using the first parameter as the number of decoding bits to obtain the target number of encoding bits, where the target number of encoding bits is the number of encoding bits required to encode the first value, and the first value is obtained by performing a shift operation on the absolute value of the prediction residual.

Optionally, the second parameter includes a first sub-parameter, a second sub-parameter, and a third sub-parameter, where the first sub-parameter indicates a bit depth of the to-be-decoded point cloud block in a first direction, the second sub-parameter indicates a bit depth of the to-be-decoded point cloud block in a second direction, and the third sub-parameter indicates a bit depth of the to-be-decoded point cloud block in a third direction;

the first parameter includes a fourth sub-parameter, a fifth sub-parameter, and a sixth sub-parameter, where the fourth sub-parameter indicates the number of bits required to encode the first sub-parameter, the fifth sub-parameter indicates the number of bits required to encode the second sub-parameter, and the sixth sub-parameter indicates the number of bits required to encode the third sub-parameter; and

the processor 610 is specifically configured to:

perform entropy decoding on a geometry encoding result of the to-be-decoded point cloud block in the first direction based on the fourth sub-parameter;

perform entropy decoding on a geometry encoding result of the to-be-decoded point cloud block in the second direction based on the fifth sub-parameter; and

perform entropy decoding on a geometry encoding result of the to-be-decoded point cloud block in the third direction based on the sixth sub-parameter.

Optionally, the processor 610 is specifically configured to:

receive a geometric bitstream sent by an encoder, where the geometric bitstream includes the geometry encoding result and the first parameter corresponding to the to-be-decoded point cloud block.

Optionally, the processor 610 is specifically configured to:

acquire the first parameter corresponding to the to-be-decoded point cloud block in a case that a longest edge length of the to-be-decoded point cloud block is less than or equal to a threshold.

Specifically, the terminal in the embodiments of this application further includes an instruction or a program stored in the memory 609 and capable of running on the processor 610. The processor 610 calls the instruction or program in the memory 609 to execute the method performed by the modules shown in FIG. 6 or FIG. 7, with the same technical effects achieved. To avoid repetition, details are not described herein again.

An embodiment of this application further provides a readable storage medium. The readable storage medium stores a program or instructions, where when the program or instructions are executed by a processor, the processes of the above point cloud encoding processing method embodiment are implemented, or the processes of the above point cloud decoding processing method embodiment are implemented, with the same technical effects achieved. To avoid repetition, details are not described herein again.

The processor is the processor in the terminal described in the above embodiments. The readable storage medium includes a computer-readable storage medium, such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface, where the communication interface is coupled to the processor, and the processor is configured to run a program or instructions to implement the processes of the above point cloud encoding processing method embodiment, or to implement the processes of the above point cloud decoding processing method embodiment, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product. The computer program/program product is stored in a storage medium, and the computer program/program product is executed by at least one processor to implement the processes of the above point cloud encoding processing method or point cloud decoding processing method embodiments, with the same technical effects achieved. To avoid repetition, details are not described herein again.

An embodiment of this application further provides a codec system, including: an encoder device and a decoder device, where the encoder device is configured to perform the steps of the foregoing point cloud encoding processing method, and the decoder device is configured to perform the steps of the foregoing point cloud decoding processing method.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the prior art may be implemented in a form of a software product. The software product is stored in a storage medium (such as a ROM/RAM, a magnetic disk, or an optical disc), and includes several instructions for instructing a terminal or a network-side device to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A point cloud encoding processing method, executed by an encoder, comprising:

    determining a to-be-encoded point cloud block based on geometric information of a point cloud, and determining a first parameter based on the to-be-encoded point cloud block, wherein the first parameter is used to indicate the number of bits required to encode a second parameter, and the second parameter is used to indicate a size of the to-be-encoded point cloud block;

constructing a predictive tree corresponding to the to-be-encoded point cloud block, and determining a prediction residual of a node in the predictive tree; and

performing entropy encoding on the prediction residual based on the first parameter to obtain a geometry encoding result.

2. The method according to claim 1, wherein the performing entropy encoding on the prediction residual based on the first parameter comprises:

performing a shift operation on an absolute value of the prediction residual to obtain a first value;
determining a target number of encoding bits required to encode the first value; and
encoding the target number of encoding bits using the first parameter as the number of encoding bits, to obtain a first sub-encoding result; wherein
the geometry encoding result comprises the first sub-encoding result.

3. The method according to claim 2, wherein the performing entropy encoding on the prediction residual based on the first parameter further comprises:

encoding the first value based on the target number of encoding bits to obtain a second sub-encoding result;
performing a modulo operation on the absolute value of the prediction residual to obtain a second value;
encoding the second value to obtain a third sub-encoding result; and
encoding a third value to obtain a fourth sub-encoding result, wherein the third value is used to indicate whether the prediction residual is greater than zero; wherein
the geometry encoding result comprises the first sub-encoding result, the second sub-encoding result, the third sub-encoding result, and the fourth sub-encoding result.

4. The method according to any one of claims 1 to 3, wherein the second parameter comprises a first sub-parameter, a second sub-parameter, and a third sub-parameter, wherein the first sub-parameter indicates a bit depth of the to-be-encoded point cloud block in a first direction, the second sub-parameter indicates a bit depth of the to-be-encoded point cloud block in a second direction, and the third sub-parameter indicates a bit depth of the to-be-encoded point cloud block in a third direction;

the first parameter comprises a fourth sub-parameter, a fifth sub-parameter, and a sixth sub-parameter, wherein the fourth sub-parameter indicates the number of bits required to encode the first sub-parameter, the fifth sub-parameter indicates the number of bits required to encode the second sub-parameter, and the sixth sub-parameter indicates the number of bits required to encode the third sub-parameter; and
the performing entropy encoding on the prediction residual based on the first parameter comprises:

performing entropy encoding on a prediction residual in the first direction based on the fourth sub-parameter;
performing entropy encoding on a prediction residual in the second direction based on the fifth sub-parameter; and
performing entropy encoding on a prediction residual in the third direction based on the sixth sub-parameter.

5. The method according to any one of claims 1 to 4, wherein after the performing entropy encoding on the prediction residual based on the first parameter to obtain a geometry encoding result, the method further comprises:
sending a geometric bitstream to a decoder, wherein the geometric bitstream comprises the geometry encoding result and the first parameter.

6. The method according to any one of claims 1 to 5, wherein the determining a first parameter based on the to-be-encoded point cloud block comprises:
determining the first parameter based on the to-be-encoded point cloud block in a case that a longest edge length of the to-be-encoded point cloud block is less than or equal to a threshold.

7. A point cloud decoding processing method, executed by a decoder, comprising:

acquiring a first parameter corresponding to a to-be-decoded point cloud block, wherein the first parameter is used to indicate the number of bits required to encode a second parameter, and the second parameter is used to indicate a size of the to-be-decoded point cloud block;

performing entropy decoding on a geometry encoding result corresponding to the to-be-decoded point cloud block based on the first parameter to obtain a prediction residual; and

performing geometric reconstruction processing based on the prediction residual to obtain geometric information.

8. The method according to claim 7, wherein the geometry encoding result comprises a first sub-encoding result, a second sub-encoding result, a third sub-encoding result, and a fourth sub-encoding result; and

the performing entropy decoding on a geometry encoding result corresponding to the to-be-decoded point cloud block based on the first parameter to obtain a prediction residual comprises:

decoding the first sub-encoding result based on the first parameter to obtain a target number of encoding bits;

decoding the second sub-encoding result based on the target number of encoding bits to obtain a first value;

decoding the third sub-encoding result to obtain a second value, wherein the second value is a value obtained by performing a modulo operation on an absolute value of the prediction residual;

decoding the fourth sub-encoding result to obtain a third value, wherein the third value is used to indicate whether the prediction residual is greater than zero; and

determining the prediction residual based on the first value, the second value, and the third value.

9. The method according to claim 8, wherein the decoding the first sub-encoding result based on the first parameter to obtain a target number of encoding bits comprises:

decoding the first sub-encoding result using the first parameter as the number of decoding bits to obtain the target number of encoding bits, wherein the target number of encoding bits is the number of encoding bits required to encode the first value, and the first value is obtained by performing a shift operation on the absolute value of the prediction residual.

10. The method according to any one of claims 7 to 9, wherein the second parameter comprises a first sub-parameter, a second sub-parameter, and a third sub-parameter, wherein the first sub-parameter indicates a bit depth of the to-be-decoded point cloud block in a first direction, the second sub-parameter indicates a bit depth of the to-be-decoded point cloud block in a second direction, and the third sub-parameter indicates a bit depth of the to-be-decoded point cloud block in a third direction;

the first parameter comprises a fourth sub-parameter, a fifth sub-parameter, and a sixth sub-parameter, wherein the fourth sub-parameter indicates the number of bits required to encode the first sub-parameter, the fifth sub-parameter indicates the number of bits required to encode the second sub-parameter, and the sixth sub-parameter indicates the number of bits required to encode the third sub-parameter; and

the performing entropy decoding on a geometry encoding result corresponding to the to-be-decoded point cloud block based on the first parameter comprises:

performing entropy decoding on a geometry encoding result of the to-be-decoded point cloud block in the first direction based on the fourth sub-parameter;

performing entropy decoding on a geometry encoding result of the to-be-decoded point cloud block in the second direction based on the fifth sub-parameter; and

performing entropy decoding on a geometry encoding result of the to-be-decoded point cloud block in the third direction based on the sixth sub-parameter.

11. The method according to any one of claims 7 to 10, wherein the acquiring a first parameter corresponding to a to-be-decoded point cloud block comprises:

receiving a geometric bitstream sent by an encoder, wherein the geometric bitstream comprises the geometry encoding result and the first parameter corresponding to the to-be-decoded point cloud block.

12. The method according to any one of claims 7 to 10, wherein the acquiring a first parameter corresponding to a to-be-decoded point cloud block comprises:

acquiring the first parameter corresponding to the to-be-decoded point cloud block in a case that a longest edge length of the to-be-decoded point cloud block is less than or equal to a threshold.

13. A point cloud encoding processing apparatus, comprising:

a first determining module configured to determine a to-be-encoded point cloud block based on geometric information of a point cloud, and determine a first parameter based on the to-be-encoded point cloud block, wherein the first parameter is used to indicate the number of bits required to encode a second parameter, and the second parameter is used to indicate a size of the to-be-encoded point cloud block;

a second determining module configured to construct a predictive tree corresponding to the to-be-encoded point cloud block, and determine a prediction residual of a node in the predictive tree; and

an encoding module configured to perform entropy encoding on the prediction residual based on the first parameter to obtain a geometry encoding result.

14. A point cloud decoding processing apparatus, comprising:

an acquisition module configured to acquire a first parameter corresponding to a to-be-decoded point cloud block, wherein the first parameter is used to indicate the number of bits required to encode a second parameter, and the second parameter is used to indicate a size of the to-be-decoded point cloud block;

a decoding module configured to perform entropy decoding on a geometry encoding result corresponding to the to-be-decoded point cloud block based on the first parameter to obtain a prediction residual; and

a reconstruction module configured to perform geometric reconstruction processing based on the prediction residual to obtain geometric information.

15. A terminal, comprising a processor, a memory, and a program or instructions stored in the memory and capable of running on the processor, wherein when the program or instructions are executed by the processor, the steps of the point cloud encoding processing method according to any one of claims 1 to 6 are implemented; or when the program or instructions are executed by the processor, the steps of the point cloud decoding processing method according to any one of claims 7 to 12 are implemented.

16. A readable storage medium, wherein the readable storage medium stores a program or instructions, and when the program or instructions are executed by a processor, the steps of the point cloud encoding processing method according to any one of claims 1 to 6 are implemented, or the steps of the point cloud decoding processing method according to any one of claims 7 to 12 are implemented.

17. A codec system, comprising: an encoder device and a decoder device, wherein the encoder device is configured to perform the steps of the point cloud encoding processing method according to any one of claims 1 to 6, and the decoder device is configured to perform the steps of the point cloud decoding processing method according to any one of claims 7 to 12.

18. A chip, wherein the chip comprises a processor and a communication interface, the communication interface is coupled to the processor, and the processor is configured to run a program or instructions to implement the steps of the point cloud encoding processing method according to any one of claims 1 to 6; or to implement the steps of the point cloud decoding processing method according to any one of claims 7 to 12.

19. A computer program/program product, wherein the computer program/program product is stored in a storage medium, and the program/program product is executed by at least one processor to implement the steps of the point cloud encoding processing method according to any one of claims 1 to 6; or to implement the steps of the point cloud decoding processing method according to any one of claims 7 to 12.

FIG. 1

FIG. 2

Root node                                                    Leaf node

FIG. 3

Start

Determine a to-be-encoded point cloud block based on geometric
information of a point cloud, and determine a first parameter
based on the to-be-encoded point cloud block                          101

Construct a predictive tree corresponding to the to-be-encoded
point cloud block, and determine a prediction residual of a node       102
in the predictive tree

Perform entropy encoding on the prediction residual based on the       103
first parameter to obtain a geometry encoding result

End

FIG. 4

```
            ┌─────────────┐
            ◁    Start    ▷
            └──────┬──────┘
                   │
                   ▼
┌──────────────────────────────────────────────┐
│ Acquire a first parameter corresponding to a │      201
│   to-be-decoded point cloud block            │
└──────────────────┬───────────────────────────┘
                   │
                   ▼
┌──────────────────────────────────────────────┐
│ Perform entropy decoding on a geometry       │
│ encoding result corresponding to the         │      202
│ to-be-decoded point cloud block based on     │
│ the first parameter to obtain a prediction   │
│ residual                                     │
└──────────────────┬───────────────────────────┘
                   │
                   ▼
┌──────────────────────────────────────────────┐
│ Perform geometric reconstruction processing  │      203
│ based on the prediction residual to obtain   │
│ geometric information                        │
└──────────────────┬───────────────────────────┘
                   │
                   ▼
              ╭──────────╮
              │   End    │
              ╰──────────╯
```

FIG. 5

```
                          300
        ┌─────────────────────────────┐
        │  Point cloud encoding       │
        │  processing apparatus       │
        │  ┌───────────────────────┐  │
        │  │  First determining    │  │   301
        │  │  module               │  │
        │  └───────────┬───────────┘  │
        │              │              │
        │  ┌───────────┴───────────┐  │
        │  │  Second determining   │  │   302
        │  │  module               │  │
        │  └───────────┬───────────┘  │
        │              │              │
        │  ┌───────────┴───────────┐  │
        │  │  Encoding module      │  │   303
        │  │                       │  │
        │  └───────────────────────┘  │
        └─────────────────────────────┘
```

FIG. 6

400

Point cloud decoding
processing apparatus

Acquisition
module — 401

Decoding module — 402

Reconstruction
module — 403

FIG. 7

500

Communication device

501 — Processor ⟺ Memory — 502

FIG. 8

FIG. 9

## INTERNATIONAL SEARCH REPORT

| International application No. |
| --- |
| **PCT/CN2024/080422** |

| A. | CLASSIFICATION OF SUBJECT MATTER |
| --- | --- |

H04N19/50(2014.01)i; G06T17/00(2006.01)i

According to International Patent Classification (IPC) or to both national classification and IPC

| B. | FIELDS SEARCHED |
| --- | --- |

Minimum documentation searched (classification system followed by classification symbols)

IPC: H04N G06T

Documentation searched other than minimum documentation to the extent that such documents are included in the fields searched

Electronic data base consulted during the international search (name of data base and, where practicable, search terms used)

CNTXT, WPABSC, ENTXTC, DWPI, ENTXT, CNKI, IEEE, JVET: 深度, 比特数, 边长, 标识, 参数, 残差, 尺寸, 大小, 点云, 码长, 位数, 语法, 预测树, 元素, 指示, Depth, Number, Bits, Length, Identity, Parameter, Residual, Size, Point Cloud, Code, Syntax, Prediction Tree, Elements, Instructions

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 115335868 A (PANASONIC INTELLECTUAL PROPERTY CORPORATION OF AMERICA) 11 November 2022 (2022-11-11) description, paragraphs 157, 578 and 666-727 | 1-3, 5, 7-9, 11, 13-19 |
| A | CN 115474051 A (VIVO COMMUNICATION TECHNOLOGY CO., LTD.) 13 December 2022 (2022-12-13) entire document | 1-19 |
| A | WO 2021201384 A1 (LG ELECTRONICS INC.) 07 October 2021 (2021-10-07) entire document | 1-19 |
| A | WO 2022258009 A1 (VIVO MOBILE COMMUNICATION CO., LTD.) 15 December 2022 (2022-12-15) entire document | 1-19 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **24 May 2024** | **31 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/080422**

| Patent document<br>cited in search report | | | Publication date<br>(day/month/year) | Patent family member(s) | | | Publication date<br>(day/month/year) |
|---|---|---|---|---|---|---|---|
| CN | 115335868 | A | 11 November 2022 | US | 2023005187 | A1 | 05 January 2023 |
| | | | | WO | 2021193899 | A1 | 30 September 2021 |
| CN | 115474051 | A | 13 December 2022 | | None | | |
| WO | 2021201384 | A1 | 07 October 2021 | | None | | |
| WO | 2022258009 | A1 | 15 December 2022 | | None | | |

Form PCT/ISA/210 (patent family annex) (July 2022)

**EP 4 683 326 A1**

**Patent documents cited in the description**

- CN 202310243014